# EUROPEAN PATENT APPLICATION

(11) **EP 4 748 883 A2**
(43) Date of publication of application: **27.05.2026**
(21) Application number: 26171119.6
(22) Date of filing: 18.07.2022
(51) Int. Cl.: C08L 23/28

(54) **ELASTOMERIC COMPOSITION AND ARTICLES COMPRISING THE COMPOSITION**

(62) Divisional of application: 22754046.5
(71) Applicant: UPM-Kymmene Corporation, 00100 Helsinki (FI)
(72) Inventor: DIEHL, Florian, 41464 Neuss (DE); GALL, Barbara, 83059 Kolbermoor (DE)
(74) Representative: Hoffmann Eitle

(57) **Abstract**

The invention relates to compositions comprising an elastomeric polymer and 50 phr (parts per 100 parts of the polymer) or more HTC lignin, whereby the HTC lignin has a particle size D₉₀ as determined by ISO 13320:2020 of 5 µm or more and a STSA surface area of 40 m²/g or less as determined by ASTM D 6556-14. The invention also provides an article comprising the composition and the use of the composition in a gas barrier.

## Description

The present invention relates to a composition comprising an elastomeric polymer and hydrothermally treated lignin, articles comprising the same and to the use of the composition in a gas barrier.

### Background

Carbon black finds wide use as a filler for rubber articles such as tyres. However, carbon black is generally produced from fossil materials and thus not a sustainable material. To produce rubber articles on a more sustainable and environmentally friendly basis, numerous attempts have been made to replace carbon black with renewable materials such as lignin. To date, however, these attempts have not led to satisfactory rubber compositions and respective products have not been commercialised on a large scale.

WO 2016/185351 discloses a compound for a tyre sealant comprising kraft lignin. Further uses of lignin in rubber blends are disclosed in WO 2020/140155 and in Aini et al., Front. Mater. 6 (2020) 329.

EP-3 243 877 discloses a pneumatic tyre comprising hydrothermally carbonized lignin. Hydrothermally treated lignin (also known as HTC lignin) is derived from lignin by thermochemical conversion in the presence of water (see e.g. Correa et al., Materials 11 (2018) 1568). The HTC lignin of EP-3 243 877 has a surface area below 150 m²/g. It is stated that the HTC lignin can be used in an amount of 75 wt.-% of the total rubber composition. For non-tread samples containing 46 phr (parts per 100 parts rubber), EP-3 243 877 suggests that the tanδ of the rubber composition containing HTC lignin was lower than that of a rubber composition containing carbon black. Further advantages are claimed in view of the tensile strength. No mention is made of air and gas permeability.

WO2020/202125 discloses an inner liner comprising HTC lignin as partial replacement for carbon black. WO2020/202125 suggests the use of 15-45 phr HTC lignin, preferably with surface area of 30-55m²/g, D₅₀ 1-4µm and D₉₀ 5-8µm. Compared to carbon black and a combination of carbon black and kraft lignin (see WO 2016/185351 above) a rubber mixture containing carbon black and 30 phr HTC lignin is said to show an improved oxygen impermeability without changing the M300%.

EP-A 3 974 470 discloses compositions comprising halobutyl rubber and 50 to 90 phr of certain HTC lignin fillers having an STSA surface area of 10 to 50 m²/g. The use of these fillers reduces the gas permeability by 15% or less compared to carbon black.

### Summary of the Invention

The present invention provides a composition with reduced gas permeability and further beneficial properties. The composition according to the invention is particularly beneficial when used in a gas barrier or in articles requiring gas barrier properties such as hoses, membranes, hollow articles and tyres. The composition is especially useful for use in or as inner liners for pneumatic tyres.

The composition according to the present invention comprises an elastomeric polymer and HTC lignin. The HTC lignin is present in an amount of 50 phr (parts per 100 parts of the polymer) or more. Preferably, the HTC lignin has a particle size D₉₀ as determined by ISO 13320 of 5 µm or more and a surface area of 40 m²/g or less as determined by ASTM D 6556-14.

Surprisingly, it was found that the composition according to the present invention can significantly improve several properties of the elastomer containing composition, including the gas permeability.

### Detailed Description

The polymer of the present invention is an elastomer including rubbers and polymer rubber mixtures and composites.

The composition of the invention can comprise numerous types of elastomers, such as styrene-butadiene polymers and block copolymers, polyisoprene, natural rubbers, polybutadiene, ethylene propylene rubber, silicone elastomers, fluoro-elastomers, polyurethane elastomers and nitrile rubbers. Styrene butadiene (SBR) and butadiene (BR) are the most common rubber polymers in the tyre industry. The composition of the invention can comprise one or more elastomers.

The elastomer of the present invention can be any elastomer including natural and synthetic rubber. Rubber as used herein is a diene polymer or diene-containing copolymer derived from butadiene, isobutylene and isoprene. Particularly preferred are isobutylene and isoprene copolymers (also known as butyl rubbers) as well as the respective halogenated rubbers also known as halobutyl rubbers.

Butyl rubber is a synthetic copolymer of isobutylene (typically 98-99 wt.-%) and isoprene (typically 1-2 wt.-%). It is characterized by its very low unsaturation content and has distinct chemical and physical properties. Butyl rubber shows low gas permeability and high chemical resistance.

Butyl rubber is typically produced by the cationic copolymerization of isobutylene with isoprene in the presence of a Friedel-Crafts catalyst at low temperature, for example around -100 C or -90°C. The halogenated butyl rubber may then be produced, for example, by reacting a hexane solution of butyl rubber with elemental bromine or chlorine.

Halogenated butyl rubber can be obtained by halogenating butyl rubbers during or after polymerisation. Chloro- and bromo-butyl rubbers show improved compatibility with other polymers and higher cure rates than butyl rubber. The allylic C-Br or C-Cl bonds facilitate vulcanization and allow for a cure chemistry that is fundamentally different from other elastomers that rely on the reactivity of allylic C-H bonds. Halobutyl rubbers may for example be cured by ZnO alone, producing vulcanizates in the absence of sulfur. This distinct cure chemistry may for example facilitate co-vulcanization with other rubbers, such as natural rubber (NR) and styrene-butadiene rubber.

Halogenated butyl rubbers for use in the present formulations may comprise copolymers of isobutylene (for example 95-99.5 weight percent, or preferably 98-99 wt.-%) and isoprene (for example 0.5-5 wt.-%, 0.3-6 wt.-% or 1-2 wt.-%, based on the total weight of monomers). Chlorobutyl rubber may for example contain chlorine in an amount of from about 0.1 to about 6 wt.-%, or from about 0.8 to about 15 wt.-% (based on the weight of the polymer). Bromobutyl rubber may for example contain bromine in an amount of from about 0.1 to about 15 wt.-%, or from about 1 to about 6 wt.-% (based on the weight of the polymer). In halogenated butyl rubbers, the halogen content is limited by the isoprene content, and further limited by the fact that only a portion of the double bonds are halogenated. In a typical halobutyl rubber 60% of the double bonds may have an allylic halogen subtituent.

In a preferred embodiment, the rubber mixture comprises halobutyl rubber, which may contain at least one further diene rubber. In one particularly preferred embodiment, the rubber mixture comprises from 31 to 100 phr of at least one halobutyl rubber and from 0 to 69 phr of at least one further diene rubber. In case of inner liners, a polymer derived from isobutene and para-bromo methyl styrene is preferred. In such polymers high bromomethyl-styrene concentrations (e.g 40 to 60 mol.-%, especially 50 mol-%) are particularly preferred. A commercial polymer of this kind is Exxpro^{™} 3563 by Exxon Mobile.

The further diene rubber may be selected from the group consisting of natural rubber, butyl rubber, polybutadiene rubber, styrene-butadiene copolymer, synthetic polyisoprene, natural polyisoprene, styrene-isoprene copolymer, styrene-isoprene-butadiene terpolymer, solution-polymerized styrene-butadiene rubber, and emulsion-polymerized styrene-butadiene rubber, and/or ethylene-propylene-diene rubber.

The rubber components can be functionalized. This functionalization uses hydroxy groups and/or epoxy groups and/or siloxane groups and/or amino groups and/or phthalocyanine groups and/or aminosiloxane groups and/or carboxy groups and/or further functionalization systems which can enter into chemical bonding with the pale-colored fillers used.

Fillers are used to improve the mechanical properties of elastomers and vulcanised or crosslinked elastomers and rubbers. Typical examples are carbon black and silica. In the tyre manufacturing and rubber industries, carbon black and silica are extensively used as fillers. Approximately 93 % of carbon black is used in rubber compounding and it is often classified in two main categories: mechanical rubber goods (i.e hoses and automotive belts) and tyres.

The filler of the present invention comprises hydrothermally carbonised lignin, also known as HTC lignin. Lignin is the second most abundant natural resource. It is an aromatic polymer that holds cellulose and hemicellulose together in plants, it strengthens cell walls and protects plants against parasites and disease. The complex structure of amorphous lignin is formed by the attachment of different functional groups such as methoxyl, phenolic, hydroxyl, and carbonyl groups. A huge amount of lignin by-product is produced by the paper and pulp industries, and about 98% of that is usually burned to generate energy or just disposed of in landfill.

Hydrothermal carbonisation is a thermochemical process whereby biomass is treated under pressure and in the presence of hot water and/or steam. As opposed to pyrolysis, biomass decomposes incompletely during HTC and the products are a solid carbon-rich material, a gas phase composed mainly of CO₂, water and water-soluble compounds.

HTC lignin can be prepared from any kind of lignin-containing starting material such as lignin-containing waste materials as well as lignin in solid or dissolved form and mixtures thereof. A high lignin content of 60 wt.-% or more, preferably 80 wt.-% or more or better still more than 90 wt.-% in the starting material is preferred.

Preferred lignin-containing raw materials are black liquor from the digestion of woody biomass or solids prepared from it, solids from the enzymatic hydrolysis of woody biomass, black liquor from the digestion of woody biomass with sulphites (lignosulfonates) or solids or liquids prepared from the digestion of woody biomass with solvents (e.g. organosolv lignin). In a preferred embodiment of the present invention, the lignin is derived as a side stream in the enzymatic hydrolysis of a lignocellulosic feedstock. This preferred starting material is also known as EH-lignin.

The lignin-containing biomass may be selected from a group consisting of kraft lignin, steam explosion lignin, biorefinery lignin, supercritical separation lignin, hydrolysis lignin, flash precipitated lignin, biomass originating lignin, lignin from alkaline pulping process, lignin from soda process, lignin from organosolv pulping, lignin from alkali process, lignin from enzymatic hydrolysis process, and any combination thereof. In one embodiment, the lignin is wood based lignin. The lignin can originate from softwood, hardwood, annual plants or from any combination thereof.

"Kraft lignin" is lignin that originates from kraft black liquor. Black liquor is an alkaline aqueous solution of lignin residues, hemicellulose, and inorganic chemicals used in a kraft pulping process. The black liquor from the pulping process comprises components originating from different softwood and hardwood species in various proportions. Kraft-lignin can be separated from the black liquor by different, techniques including e.g. precipitation and filtration.

The term "flash precipitated lignin" should be understood as lignin that has been precipitated from black liquor in a continuous process by decreasing the pH of a black liquor flow, under the influence of an over pressure of 200 - 1000 kPa, down to the precipitation level of lignin using a carbon dioxide based acidifying agent, preferably carbon dioxide, and by suddenly releasing the pressure for precipitating lignin. The flash precipitated lignin particles, having a particle diameter of less than 2 µm form agglomerates, which can be separated from black liquor using e.g. filtration.

The lignin may originate from an organosolv process. Organosolv is a pulping technique that uses an organic solvent to solubilize lignin and hemicellulose.

The lignin may be slurried or dissolved for the hydrothermal conversion. Preferably, the lignin is dissolved in alkaline solution, such as NaOH. The dissolution may be accomplished by heating the mixture of lignin and alkaline solution to about 80 °C, adjusting the pH to a value above 7, such as 9 - 11, and mixing the mixture of lignin and alkaline solution for a predetermined time. The mixing time may be continued for about 2 - 3 hours. The exact pH value is determined based on the grade target of the product.

The slurry may directly be subjected to hydrothermal treatment or fed to a separation unit, wherein the precipitated lignin may be separated from the slurry.

The hydrothermal carbonization treatment may take place in a reactor (HTC reactor), or if needed, in several parallel reactors, working in a batchwise manner. The dissolved lignin may be pre-heated before being entered in the HTC reactor(s). The temperature in the HTC reactor(s) may be 150 - 250 °C and the pressure may be 20 - 30 bar. The residence time in the HTC reactor(s) may be about three to six hours. In the HTC reactor, the lignin is carbonized, whereby a stabilized lignin derivative with a high specific surface area may be precipitated. The formed slurry comprising the carbonized lignin may then be removed and cooled.

The lignin-containing starting material, preferably in the form of a lignin solution, is subjected to a hydrothermal carbonization (HTC) process. For instance, the HTC lignin can be obtained by heating a lignin-containing starting material in the presence of water to temperatures between 150 and 350°C, preferably between 150°C and 250°C under autogenic pressure, typically 10 to 40 bar. The heat treatment can be maintained for 30 minutes and up to 8 or more hours. Preferably, the treatment is completed within 1 to 6 hours or more preferably within 2 to 4 hours.

For the hydrothermal carbonisation of the lignin-containing raw materials it is preferred that at least a part of the lignin is dissolved. Such partial or full dissolution can be achieved by adjusting the pH to >7, preferably >9 and most preferably >10. A pH between 10 and 12, preferably between 10 and 11 before the HTC treatment favorably impacts the particle size distribution for the use according to the present invention. In a preferred embodiment, the lignin for the hydrothermal treatment is in solution.

The dissolution may also be assisted by raising the temperature to more than 50°, for instance 70 to 90°C and preferably 80°C. The dissolution conditions should be maintained for at least 5 minutes, more preferably at least 10 minutes, more preferably at least 15 minutes particularly preferably at least 30 minutes, in particular at least 45 minutes but less than 300 minutes.

For the present invention, it is not necessary that the entire lignin is dissolved in the liquid. Advantageously, however, more than 50%, particularly preferably more than 60%, in addition preferably more than 70%, particularly preferably more than 80% in particular more than 90% of the lignin dissolved in the liquid.

In a particularly preferred embodiment, the mixture of the at least partially dissolved lignin also comprises at least one crosslinking agent capable of reacting with the functional groups of the lignin. Such crosslinking compounds may have aldehyde, carboxylic acid, epoxy, hydroxyl, isocyanate or other functional groups. The functional group of the crosslinking agent should be capable of reacting twice with the functional groups of the lignin. If the functional group can only react once, the crosslinking agent should contain at least two such groups. Aldehydes and especially formaldehyde are preferred. The crosslinking agent may be added in the dissolution step and/or the HTC step. The reaction of the crosslinking agent with the lignin may also be an intermediate step between the dissolution and the HTC steps and it may require a pH adjustment to effect the reaction.

The crosslinking agent should be used in excess relative to the cross-linkable groups of the lignin. Such excess can be 1.5, 2 or even 4-fold. Amounts beyond a 4-fold excess are unnecessary and thus economically not recommendable. Typical amounts are less than 40, less than 35 or preferably less than 25 wt.-% based on the lignin weight. Specifically, in the case of formaldehyde, the amount may be as low as less than 10 or even less than 5 wt.-%.

The amount and type of the crosslinking agent helps to adjust the surface area of the product obtained in the HTC step. The use of the crosslinking agent increases the surface area of the HTC lignin, whereby generally the surface area also increases with an increase in the amount of crosslinker.

The HTC lignin for use in the present invention has a particle size of D₉₀ of 5 µm or more as determined by laser diffraction according to ISO 13320:2020. The particle size D₉₀ of the HTC lignin is preferably 8 µm or more such as 10 µm or more. Particularly preferred are D₉₀ values of 20 µm or more or even 30 µm or more.

In the measurement according to ISO 13320:20 the HTC lignin is suspended in distilled water and the particle size distribution is measured with laser diffraction. Before and/or during the measurement of the particle size distribution, the sample to be measured is dispersed with ultrasound until a stable particle size distribution is obtained over several measurements.

The particle size distribution can be influenced by certain process parameters. For instance, particle size control can be achieved by adjusting the dry matter content of the feed, the pH of the feed, the inorganic ion concentration of the feed and the temperature and residence time during the hydrothermal treatment. Advantageously, the dry matter concentration of the feed does not exceed 40 wt.-% (based on the feed), preferably not more than 20 wt.-% and most preferably not below 10 wt.-%. The pH is advantageously 7 or higher such as 8.5 or more or even 11 or higher. Inorganic ions as measured by conductivity to a value between 10 mS/cm and 200 mS/cm, preferably between 10 mS/cm and 150 mS/cm, more preferably between 10 mS/cm and 50 mS/cm, moreover preferably between 10 mS/cm and 40 mS/cm, in particular preferably between 10 mS/cm and 25 mS/cm (determined as conductance of the measuring probe of the PCE-PHD1 at 20° C. to 25° C.). The temperature of the hydrothermal treatment can be limited to maximum value between 200° C. and 250° C., preferably to a maximum value between 210°C. and 245° C. Residence times between 1 minute and 6 hours such as between 30 minutes and 4 hours or 1 and 3 hours are also useful. The above measures may also be adopted in combination.

If need be, the particle size can also be adjusted by separation or by mixing different HTC lignin materials. Gravity separation in liquid or gaseous media is a suitable method. Devices for separation are well known to those skilled in the art. Examples include cyclones, esp. hydrocyclones in case of liquids, centrifuges or classifiers (air classifiers. However, the present invention is not limited to the use of specific devices. All devices that allow separation can be used, e.g. fluidized bed devices, sieves etc. Different types of separation can also be combined.

The resulting HTC lignin has an STSA of 40 m²/g or less, more preferably 30 m²/g or less, such as 25, 20, 15 or 10 m²/g or less. The STSA surface area is determined according to ASTM D 6556-14. STSA (statistical thickness surface area) is an indication of the outer surface of the HTC lignin particles.

Advantageously, the BET specific surface area of the present HTC lignin deviates only by a maximum of 20% preferably by a maximum of 15% more preferably by a maximum of 10% from the STSA surface. The BET surface area is determined as the total surface area of outer and inner surface by means of nitrogen adsorption by the particles according to Brunauer, Emmett and Teller. A method for determining the BET surface is also disclosed in ASTM D 6556-14..

The composition according to the invention may further include cure activators or dispersing agents such as stearic acid (as exemplified), as well other processing aids such as, for example, naphthenic oil. A processing aid, emulsifier or dispersing agent may for example be an ammonium or alkali metal salt of C12 to C24 fatty acids, such as ammonium, sodium or potassium salts of oleic acid, palmitic acid, stearic acid or linoleic acid. Alternative dispersing agents include ammonium and alkali metal salts of polyethoxylated sulfates of C6 to C20 alkyl alcohols, or polyethoxylated alkylphenoxy ethanols, and acid esters (phthalic, adipinic, phosphoric, for example at loadings of 5-15 and 5-30 phr). Suitable amounts of the emulsifier may for example be from about 0.1 to about 15 phr, or from about 0.1 to about 5 phr.

The HTC lignin and optional further components are incorporated into the elastomer according to known methods as for example described in ASTM D3182 - 21b. The amount of HTC lignin is 50 phr or more, preferably 60 to 100 phr and most preferably 90 or more phr.

The compositions according to the invention may be formulated with the assistance of vulcanization reactants, activators, catalysts or accelerators, such as ZnO and/or sulfur and/or accelerator activators and/or sulfur donor/accelerators, such as: thiazoles, sulfenamides, guanidines, dithiocarbamates and thiuram sulfides; for example, thiocarbamamyls, dithiocarbamyls, alkoxythio carbonyls, dialkylthio phosphoryls, diamino-2,4,6-triazinyls, thiurams xanthates, and/or alkylphenols. A preferred thiazole is dibenzothiazyl disulfide (MBTS) and a preferred thiuram is tetramethyl thiuram monosulfide (TMTM). A preferred alkylphenol is poly-tert-amylphenoldisulfide. When used, suitable accelerators may for example be added in an amount of from about 0.1 to about 10 phr, or from about 0.1 to about 5 phr.

The composition according to the invention is beneficial for the manufacture of technical rubber items, such as belts, drive belts, and hoses. It is particularly beneficial in rubber items requiring gas impermeability such as hoses. Its unique properties are especially beneficial in inner liners.

An inner liner is a rubber inner layer used in tubeless pneumatic tyres, i.e., pneumatic tyres that are devoid of an air chamber, in order to ensure the sealing thereof under the pressure of the air contained within the cavity of the pneumatic tyre. The inner liner must ensure that oxygen in the air filling remains, as much as possible, confined within the cavity and does not spread into portions of the pneumatic tyre thereby leading to degradation phenomena. The material for the inner liner thus must exhibit exceptional gas barrier properties. Moreover, it must exhibit such properties at a minimum thickness because increasing the thickness entails a series of disadvantages in relation to the increase in weight and to a compromise in relation to rolling resistance.

Preferably, the composition of the present invention is an inner liner comprising the HTC lignin and a halobutyl rubber.

### Example

Samples A, B, D and F (comparative) and samples C, E and G (invention) were prepared based on the compositions in Table 1. The powder and oil components were added to the polymer followed by 7 minutes of mixing (ramp down) in a Banbury internal mixer of 1,600 ccm chamber volume set at 40°C and 60 rpm (70% fill factor). Subsequently, the curatives were added, and mixing continued for 4 minutes. Sheets of 0.5 mm thickness were formed and subjected to curing at 170°C for 35 minutes. The sheets were subjected to testing as described in the following.

Air permeability was assessed according to ASTM D1434-82(09)e1 using a LabThink VAC-V1gas permeability tester. The nitrogen transmission rate was determined at 23°C over a sample test area of 38.48cm2.

The tensile properties were determined following ASTM D412-16 at 23°C and at 100°C. The 100°C samples were conditioned for 30 minutes within the environmental chamber maintained at 100°C prior to testing.

The compression set was measured after 24 hours at 70°C following ISO 815-1. The density was measured according to ASTM D297.

**Table 1**

| | Surface area [m²/g] | D90 [µm] | A [phr] | B [phr] | C [phr] | D [phr] | E [phr] | F [phr] | G [phr] |
|---|---|---|---|---|---|---|---|---|---|
| | | | comp. | comp. | inv. | comp. | inv. | comp. | inv. |
| Bromobutyl rubber 2244 (Exxon) | | | 80 | 80 | 80 | 80 | 80 | 80 | 80 |
| Natural rubber CV60 | | | 20 | 20 | 20 | 20 | 20 | 20 | 20 |
| Napthenic oil | | | 10 | 10 | 10 | 10 | 10 | 10 | 10 |
| Norsolene S95 | | | 4 | 4 | 4 | 4 | 4 | 4 | 4 |
| MgO | | | 0.15 | 0.15 | 0.15 | 0.15 | 0.15 | 0.15 | 0.15 |
| Stearic acid | | | 2 | 2 | 2 | 2 | 2 | 2 | 2 |
| ZnO | | | 1 | 1 | 1 | 1 | 1 | 1 | 1 |
| Sulfur | | | 1.5 | 1.5 | 1.5 | 1.5 | 1.5 | 1.5 | 1.5 |
| MBTS | | | 0.5 | 0.5 | 0.5 | 0.5 | 0.5 | 0.5 | 0.5 |
| Carbon black N660 | 30 | | | 60 | | | | | |
| Carbon black N990 | 8 | | | | | 60 | | 90 | |
| HTC 1000 | 10 | 15.9 | | | | | 60 | | 90 |
| HTC 4000 | 34 | 6.3 | | | 60 | | | | |
| Air permeability [ccm/m² 24h 0.1 MPa] | | | 89.2 | 64.6 | 59.5 | 75.4 | 56.1 | 66.6 | 46.6 |
| Air perm. in % relative to carbon black | | | | 100 | 92 | 100 | 74 | 100 | 70 |
| M100% 23°C [MPa] | | | 0.27 | 1.34 | 1.60 | 0.59 | 1.21 | 0.88 | 1.95 |
| M100% 100°C [MPa] | | | 0.23 | 0.9 | 1.47 | 0.45 | 1.09 | 0.79 | 1.63 |
| M300% 23°C [MPa] | | | 0.47 | 5.37 | 4.63 | 1.71 | 2.99 | 2.91 | 3.69 |
| M300% 100°C [MPa] | | | 0.45 | 3.16 | 3.28 | 1.26 | 1.95 | 2.19 | 2.30 |
| Compression set [%] | | | 37.0 | 28.4 | 17.6 | 39.3 | 22.4 | 33.3 | 16.5 |
| Density [g/ccm] | | | 0.948 | 1.130 | 1.053 | 1.132 | 1.050 | 1.190 | 1.082 |

The data show that the compositions according to the present invention lead to a lower gas permeability compared to carbon black of a comparative surface area. Specifically, at a loading of 60 phr, the air permeability is reduced by 8 and 26%, respectively. At a loading of 90 phr the reduction amounts to 30%. This is unexpected as the prior art suggests much lower loadings (<45 phr) and requires carbon black as a co-filler or reports more modest reductions. Moreover, it is noted that the effect on the air permeability is particularly beneficial if the surface area is low and the loading is high. It is furthermore noticeable that the compositions of the invention show improved M100% and M300% characteristics, especially at high temperatures. A further beneficial property of the compositions of the invention is the reduced compression set. Yet another benefit results form the reduced density, which allows for products with reduced gas permeability at lower weight.

## Claims

1. Composition comprising an elastomeric polymer and 50 phr (parts per 100 parts of the polymer) or more HTC lignin, whereby the HTC lignin has a particle size D₉₀ as determined by ISO 13320:2020 of 5 µm or more and a STSA surface area of 40 m²/g or less as determined by ASTM D 6556-14.

2. Composition according to claim 1, wherein the elastomeric polymer is a halobutyl rubber.

3. Composition according to any one of the preceding claims, wherein the HTC lignin is present in an amount of 60 to 100 phr, preferably 90 phr or more.

4. Composition according to any one of the preceding claims, wherein the HTC lignin has an STSA surface area as determined by ASTM D 6556-14 below 30, preferably below 25, more preferably below 20, still more preferably below 15 and most preferably below 10 m²/g or less.

5. Composition according to any one of the preceding claims, wherein the HTC lignin is present in an amount of 90 phr or more and has a surface area of 10 m²/g or less.

6. Composition according to any one of the preceding claims, wherein the D₉₀ is 15 µm or more.

7. Article comprising the composition according to any one of the preceding claims.

8. Article according to claim 7, which article is a tyre, a tyre sealant or an inner liner.

9. Use of a composition according to any one of claims 1 to 6 in a gas barrier.
